# EUROPEAN PATENT SPECIFICATION

(11) **EP 1 042 700 B1**
(45) Date of publication and mention of the grant of the patent: **20.03.2002**
(21) Application number: 99917203.4
(22) Date of filing: 28.04.1999
(51) Int. Cl.: G02C 7/10

(54) **A SPECTACLE LENS AND A METHOD OF PRODUCING THE SAME**
BRILLENLINSE UND VERFAHREN ZU IHRER HERSTELLUNG
VERRE DE LUNETTES ET SON PROCEDE DE FABRICATION

(30) Priority: 31.07.1998 JP 21791798
(43) Date of publication of application: 11.10.2000
(73) Proprietor: Aoyama Optical Co., Ltd., Sabae-shi, Fukui 916-8505 (JP)
(72) Inventor: TAGAWA, Etsuo, Kishiwada-shi, Osaka 596-0004 (JP)
(74) Representative: Pearce, Anthony Richmond
(86) International application number: JP9902266
(87) International publication number: WO0007064

(56) References cited:
- EP-A- 0 409 719
- GB-A- 1 265 831
- GB-A- 2 261 077
- US-A- 3 731 993
- US-A- 4 989 967
- US-A- 5 694 240

## Description

### TECHNICAL FIELD

The present invention relates to a spectacle lens and a method of producing the same, in more details, pertains to said lens and method which can prevent eye disorders by especially restraining infrared rays, which are said to be hazardous to our vision, from entering the eyes.

### BACKGROUND ART

Conventionally, as a spectacle lens to protect our eyes from hazardous rays, such lens is known as being provided with a light-transmittable layer colored with pigments which absorb ultraviolet rays so as to restrain said rays from penetrating into the eyes. As another example, a light-polarizing lens is also known, which is intended to prevent eyestrains by abating the influence of scattering lights thrown back from water and snow surfaces on the eyes.

However, such prior spectacle lenses as mentioned above can restrain the influence of ultraviolet rays or scattering lights on the eyes, but they are far short of protecting the eyes from infrared rays. A so-called near infrared radiation having the wavelength ranging from 720 to 1000 nm invades into the eyes or far into the eyegrounds of those who routinely watch the screen of a television, factory automation equipment such as a computer and so on or experimental and observational equipment. Our eyes being exposed to such infrared radiation for a long time, we suffer not only from eyestrains, but also from the inflammation of iris, ciliary body and choroid, which are disposed in the middle layer of the eyeball, and of retina, which is disposed in the innermost layer thereof. Such inflammation going worse, it may cause serious disorders on our eyesight. It is apprehended that such disorders should be caused also by doing outdoor sports such as skiing and yachting or working outdoors. The protection of our eyes from infrared radiation is another issue, which should be resolved in the same stance as the one to protect them from ultraviolet rays.

EP-409719-A discloses a spectacle lens provided on the object side of the same with both an IR and an UV dichroic filter. GB-1265831-A discloses a filter for IR and UV radiation consisting of a gold layer laminated on any of the faces of a spectacle lens.

The present invention is to provide a spectacle lens, which is capable of not only properly restraining the invasion of such hazardous infrared rays into our eyes as mentioned above, but also transmitting sufficient amount of light to make things visible and to provide a method of producing the same lens.

### DISCLOSURE OF THE INVENTION

The means adopted in the present invention in order to solve the above issues, is characterized in that semi-reflective and semi-transmittable thin films to absorb infrared rays are dotted on the surface of the ocular side of spectacle lens.

More concretely speaking, it is characterized in that those films are essentially composed of the variety of chromium oxide.

To show another concrete example, it is characterized in that semi-translucent thin films are overlaid on said infrared rays absorbing films.

Far more concretely speaking, it is characterized in that the respective infrared rays absorbing films are hexagonally arranged on the ocular side of the lens.

Furthermore concretely speaking, it is characterized in that the respective infrared rays absorbing films are restricted in both length and width within the range of 0.2 to 0.3 mm, and the interval between adjacent films is set within the range of 0.05 to 0.25 mm.

On the other hand, the method adopted in this invention to produce the above lens is characterized in that a masking sheet with a number of apertures dotted thereon is disposed substantially in parallel to the ocular side of the lens, and through this sheet, vapor deposition of infrared rays absorbing material is performed on the ocular side thereof.

To show another concrete example, it is characterized in that vapor deposition of a semi-translucent material and/or protective coat is performed after that of said absorbing material.

Hereinafter, the best mode for carrying out the invention is described with reference to the accompanying drawings.

### BRIEF DESCRIPTION OF THE DRAWINGS

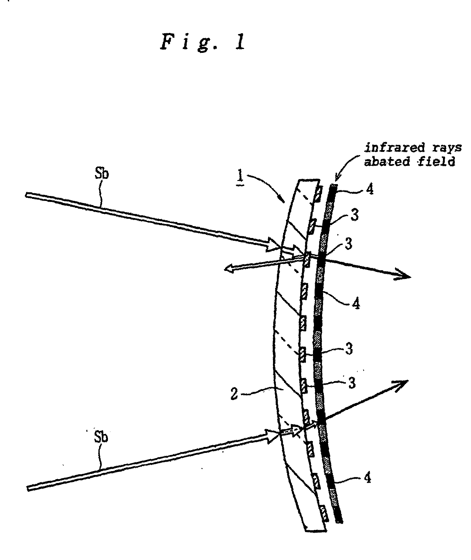

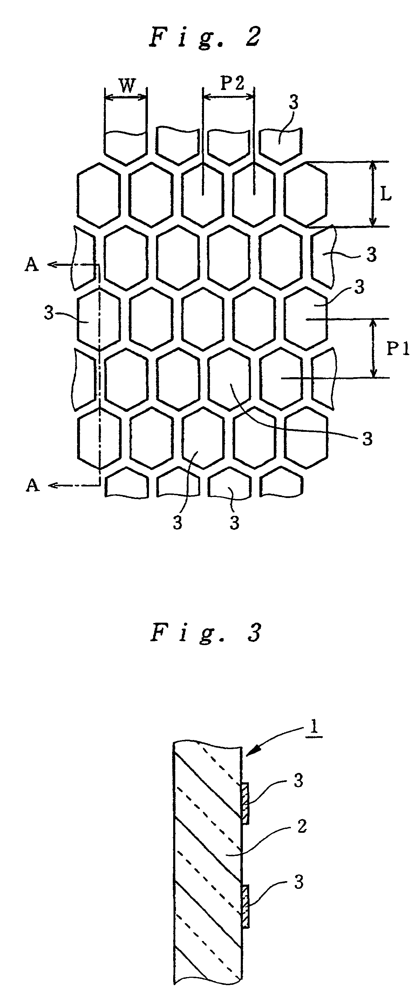

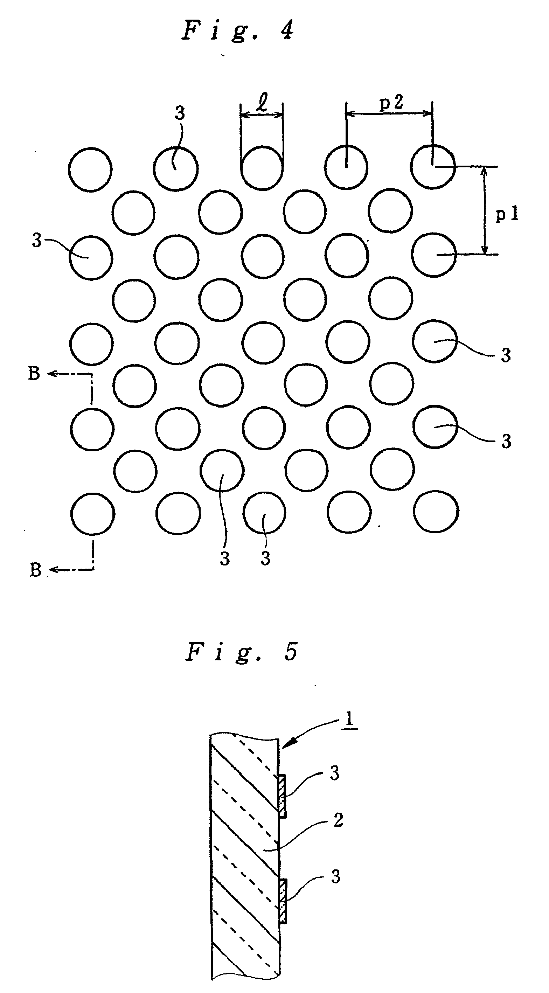

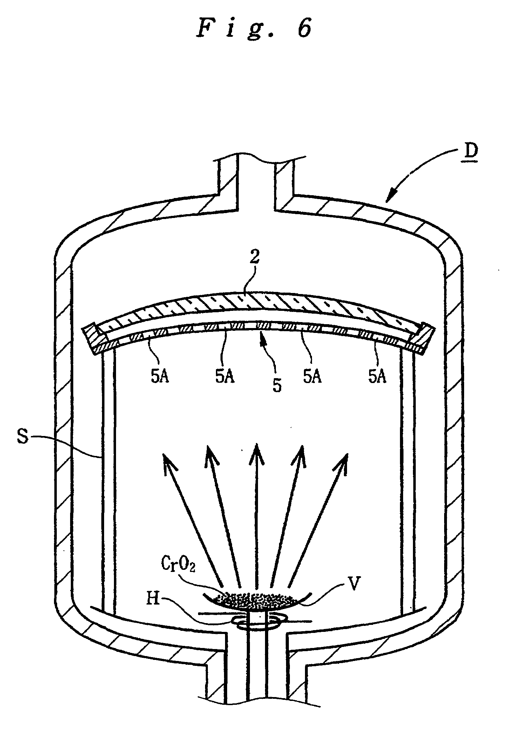

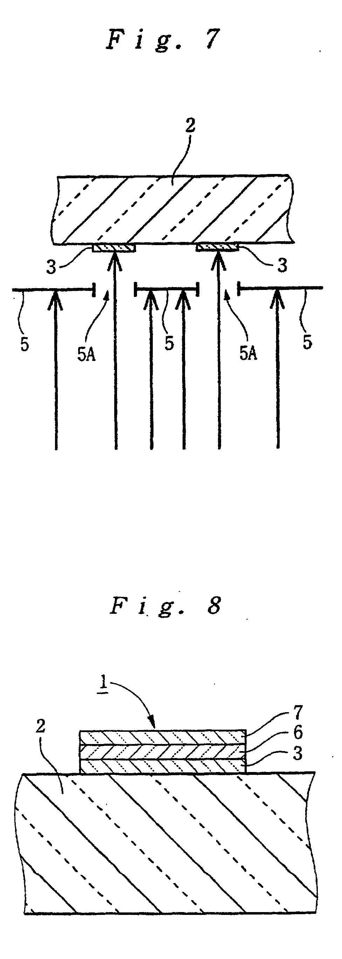

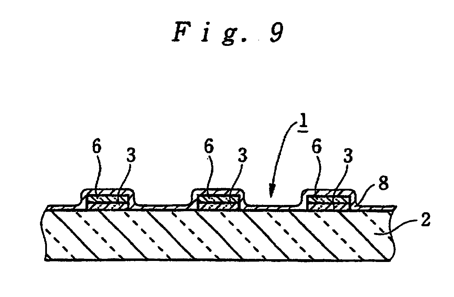

Figure 1 is a sectional view of a spectacle lens of the first embodiment of the present invention showing its structure and function; Figure 2 is a partly enlarged plan view of infrared rays absorbing films showing their layout on the lens of the first embodiment; Figure 3 is a sectional view taken along the line A-A of Figure 2; Figure 4 is a partly enlarged plan view of infrared rays absorbing films showing their layout on the lens according to the second embodiment; Figure 5 is a sectional view taken along the line B-B of Figure 4; Figure 6 is a sectional view schematically showing the internal structure of a vapor deposition apparatus used in the present invention; Figure 7 is a sectional view of the spectacle lens according to the present invention to explain how to produce the same; Figure 8 is a partly sectional view of the lens according to the present invention to show a modified embodiment; and Figure 9 is a partly sectional view of the lens according to the present invention to show another modified embodiment.

### BEST MODE FOR CARRYING OUT THE INVENTION

### (FIRST EMBODIMENT)

With a spectacle lens (1) according to this embodiment, a number of thin films (3) to absorb infrared rays are dotted by vapor deposition on the ocular side (the side that faces the eyeballs when worn) surface of the lens proper (2) which is made of glass or plastics. Said films (3) are made of chromium dioxide (CrO₂). Those films are, as shown in Figure 2, each hexagonally arranged on the surface and adjacent films are equi-distantly disposed. Concretely speaking, as shown in Figure 2, they are arranged so that the length (L) and the width (W) of each film is 0.2∼0.3 mm and 0.14 ∼0.18 mm respectively, while the lengthwise pitch (p1) is 0.13 ∼ 0.33 mm and the widthwise pitch (p2) is 0.15∼0.38 mm.

Due to such layout and sizes as mentioned above, when light rays have penetrated into the lens (1) from the side thereof facing outwards when worn, an infrared rays abated field, in which shadowy spaces (4) as shown in Figure 1 to filter out infrared rays are formed, is generated in the proximity of the ocular side of said lens in accordance with the arrangement of those films thereon, while the light rays that get through the gaps between adjacent films (3) are diffracted at those gaps so as to turn to said shadowy spaces (4). The gone-through infrared rays interfere with those remained after passed through said films at said spaces (4) so as to set off the wavelength of the former against that of the latter, so that infrared rays abate, which the present inventor specifically calls "set-off effect".

That is to say, with the spectacle lens (1) of this embodiment, as the synergistic effect between infrared rays filtering operation and a so-called "set-off effect" greatly reduces the radiation of same onto the ocular side of the lens or into the eyeballs, the affect on iris, ciliary body, choroid and retina thereof as mentioned above is much lightened, so that it can securely prevent the eyes from being damaged.

Further explaining such optical function of the lens as mentioned above on the basis of Figure 1, when sunbeam (Sb) has penetrated into the lens (1), infrared rays are filtered out by said films (3) so that the light beam of less infrared rays pass through. At this time, a certain amount of light which is to penetrate into the lens is thrown back to outer space according to the reflectivity of said film (3). Likewise, as the infrared rays of the sunbeam (Sb') which has penetrated into the respective gaps between adjacent films (3) diffract there, they interfere with those remained after passed through said films (3) at said shadowy spaces (4) so as to abate. In this way, the infrared rays which pass through the lens (1), which is taken as a whole, extremely decreases. According to the lens of this embodiment, it can greatly abate the infrared rays which are contained in the sunlight, while it can secure sufficient visible light to make us see things. With the spectacle lens of this embodiment, said shadowy spaces (4) are properly generated, not only because said thin films (3) are each hexagonally arranged, but also because the length (L) and the width (W) of each film (3) in such arrangement range from 0.2 to 0.3 mm and from 0.14 to 0.18 mm respectively, while the lengthwise pitch (p1) and the widthwise pitch (p2) range from 0.13 to 0.33 mm and from 0.15 to 0.38 mm respectively. Moreover, as said films (3) are hexagonally disposed like a honeycomb, any adjacent films are uniformly spaced apart from one another.

### (SECOND EMBODIMENT)

With the spectacle lens (1) of this embodiment, infrared absorbing thin films (3) are each formed in circular shape as shown in Figure 4, and adjacent files of those films are staggered by a half pitch from one another. Therefor, those films are uniformly disposed on the lens. The diameter (ℓ) of each film ranges from 0.2 to 0.3 mm. while the lengthwise pitch (p1) and the widthwise pitch (p2) both range from 0.15 to 0.4 mm. Due to such arrangement and sizes as mentioned above, said shadowy spaces (4) are effectively generated. As the function of the spectacle lens of this embodiment is the same as that of the above first embodiment, it is omitted to describe it in order to avoid the redundancy of the explanation.

Following the description of the above embodiments, a method for producing the above lens is described below.

Figure 6 is a sectional view of a vapor deposition apparatus, which is used for producing said spectacle lens, schematically showing its structure.

In the first place, as shown in Figure 6, a lens proper (2) to be processed in accordance with the present invention is fixed on a supporting table (S) provided in a vacuum deposition apparatus (D), and a masking sheet (5) with a number of apertures (5A) provided thereon such that they conform with a layout of infrared rays absorbing thin films (3) to be formed on the lens surface is mounted on said lens proper. Instead of this arrangement, as shown in Figure 7, said masking sheet may be disposed against said lens with a certain interval therebetween. Then, a vapor deposition is performed on the lens surface through said sheet (5) by heating and evaporating chromium dioxide (CrO ₂) mounted on a dish (V). In this operation, it enables a thin film (3), which well conforms with the shape of said aperture (5), to be effectively formed on the lens surface by performing vapor deposition while cooling said surface to a temprature which varies with a material of the lens to be used. In this way, by means of vacuum deposition method, productivity improves even on such thin films (3) as finely dotted on the lens surface. The shape of an aperture (5A) of said masking sheet (5) is not limited to hexagon or circle as disclosed in the above embodiments, but it may be modified in such other forms as rectangle or triangle.

It should be understood that the present invention is not limited to the above embodiments, but it can be modified in various manners. For example, in the respective embodiments as mentioned above, only said infrared rays absorbing films (3) are formed on the lens surface, but as shown in Figure 8, semi-translucent thin films (6) capable of polarizing light such as mica are overlaid on said films (3) and transparent protective coats (7) are further overlaid on said films (6). Also, as shown in Figure 9, after said films (6) are overlaid on said films (3), which are formed on the lens surface, the whole surface may be covered with a resin coat (8). In addition to said infrared rays absorbing films (3), a number of ultraviolet rays absorbing thin films each having 20 µ to 600 µ in thickness and made of such compounds as ZrO₂ , TiO, Ti₂O₃ , Ta₂O₅ , CeO₃ , which are not shown in the drawings, may be formed on the lens surface. In the above embodiments, it is exemplified that only chromium dioxide is used as a material for the film (3), but other compounds such as tungsten hexachloride, molybdeum pentachloride or ferric oxide are also available. Also, in the above embodiments, the infrared rays absorbing thin films are uniformly disposed on the lens surface, but it is not necessary to persist in this disposition. As far as the shadowy spaces (4) are generated in the vicinity of the lens surface, they do not have to be uniformly disposed.

### INDSUTRIAL APPLICABILITY

As having been described up to here, according to the present invention, the generation of infrared rays absorbing thin films each having semi-transmittancy on the lens surface effectively restrains the penetration of infrared rays into the eyes without hampering us from seeing things. The use of a pair of spectacles on which the lenses as disclosed in this invention are mounted, in such occasions as watching the screen of factory automation equipment for a long time, doing outdoor sports or working outside, prevents the eyes from being damaged by the hazardous infrared rays.

Also, in this invention, inexpensive chromium oxide is adopted as a material for an infrared rays absorbing thin film, so that the lens as disclosed in this invention can be suppplied on the market at a reasonable price.

Semi-translucent films are overlaid on infrared rays absorbing films, so that the applicability of the lens as disclosed in this invention expands to various fields of activity.

The infrared rays absorbing thin films are hexagonally disposed on the lens surface like a honeycomb, so that said rays can be uniformly blocked throughout the whole surface of the lens.

Where further appropriate, the length and width of an infrared rays absorbing film are specified at such ranges as described in the above embodiments so that the abatement of hazardous infrared rays, resulting from the interference of lights, is maximized.

On the other hand, with the adoption of a method of producing the above spectacle lens wherein a masking sheet with a number of apertures arranged thereon is disposed substantially in parallel to the ocular side of the lens proper, and vapor deposition of infrared rays absorbing material is performed on said lens surface through said masking sheet, it enables the same layout of infrared rays absorbing films that consists of finely dotted pattern to be easily reproduced on the lens surface, which leads to efficient mass-production of such lens as well as the reduction of its production cost.

Furthermore, vapor deposition of a semi-translucent material and/or protective coat is further performed on infrared rays absorbing material dotted on the lens surface by said deposition method, so that a spectacle lens provided with both infrared rays absorptive and semi-translucent characteristics is realized, which leads to a spectacle lens product of multi-purpose use.

In view of the foregoing, practically speaking, the present invention is of high applicability.

## Claims

1. A spectacle lens (1) wherein a number of infrared ray-absorbing thin films (3) constituted by an array of dots on the ocular side surface of said lens, said infrared rays absorbing films (3) having semi-reflectivity and semi-transmittance.

2. A spectacle lens according to claim 1 wherein said infrared ray-absorbing films are essentially made of chromium oxide.

3. A spectacle lens according to claim 1 wherein semi-translucent thin films (6) are overlaid on said infrared rays absorbing films.

4. A spectacle lens as in any one of the preceeding claims wherein the respective infrared rays absorbing films are hexagonally shaped in plan, said films as a whole being disposed like a honeycomb with regard to the lens surface.

5. A spectacle lens according to claim 4 wherein both length and width of said infrared rays absorbing film range from 0.2 to 0.3 mm while an interval between adjacent infrared rays absorbing films ranges from 0.05 to 0.25 mm.

6. A spectacle lens as in any one of the preceeding claims wherein said infrared rays absorbing films are disposed on the lens surface together with ultraviolet rays absorbing films.

7. A method of producing a spectacle lens (1) having infrared fittering properties comprising the steps of:
disposing a masking sheet (5) whose surface is dotted with a number of apertures (5A) substantially in parallel to the ocular side surface of a spectacle lens (2);
performing vapor deposition of infrared rays absorbing material (3) on said surface through said masking sheet.

8. A method of producing a spectacle lens according to claim 7 comprising the steps of:
performing the vapor deposition of the infrared rays absorbing material on the lens surface;
further performing the vapor deposition of a semi-translucent material (6) and/or protective coat (8) on said infrared rays absorbing material.

## Patentansprüche

1. Brillenlinse (1) mit einer Anzahl von Infrarotstrahlung absorbierenden Dünnschichten (3), die durch eine Anordnung von Punkten auf der augenseitigen Oberfläche der Linse gebildet werden, wobei die Infrarotstrahlung absorbierenden Schichten (3) halb reflektierend und halb durchlässig sind.

2. Brillenlinse nach Anspruch 1, wobei die Infrarotstrahlung absorbierenden Schichten im wesentlichen aus Chromoxid bestehen.

3. Brillenlinse nach Anspruch 1, wobei halbdurchlässige Dünnschichten (6) über die Infrarotstrahlung absorbierenden Schichten geschichtet sind.

4. Brillenlinse nach einem der vorstehenden Ansprüche, wobei die verschiedenen Infrarotstrahlung absorbierenden Schichten in der Draufsicht hexagonal geformt sind, wobei die Schichten als Ganzes bezüglich der Linsenoberfläche wie eine Honigwabe angeordnet sind.

5. Brillenlinse nach Anspruch 4, wobei sowohl die Länge als auch die Breite der Infrarotstrahlung absorbierenden Schicht im Bereich von 0,2 bis 0,3 mm liegen, während ein Abstand zwischen benachbarten Infrarotstrahlung absorbierenden Schichten im Bereich von 0,05 bis 0,25 mm liegt.

6. Brillenlinse nach einem der vorstehenden Ansprüche, wobei die Infrarotstrahlung absorbierenden Schichten zusammen mit Ultraviolettstrahlung absorbierenden Schichten auf der Linsenoberfläche angeordnet sind.

7. Verfahren zur Herstellung einer Brillenlinse (1) mit Infrarotfiltereigenschaften, mit den folgenden Schritten:
Anbringen einer Maskierungsfolie (5), deren Oberfläche mit einer Anzahl von Öffnungen (5A) versehen ist, im wesentlichen parallel zur augenseitigen Oberfläche einer Brillenlinse (2);
Aufdampfen von Infrarotstrahlung absorbierendem Material (3) durch die Maskierungsfolie auf die Oberfläche.

8. Verfahren zur Herstellung einer Brillenlinse nach Anspruch 7, mit den folgenden Schritten:
Aufdampfen des Infrarotstrahlung absorbierenden Materials auf die Linsenoberfläche;
weiteres Aufdampfen eines halbdurchlässigen Materials (6) und/oder eines Schutzüberzugs (8) auf das Infrarotstrahlung absorbierende Material.

## Revendications

1. Verre de lunettes (1) dans lequel un certain nombre de couches minces absorbant les rayons infrarouges (3) sont constituées d'un groupe ordonné de points sur la surface du côté oculaire dudit verre, lesdites couches minces absorbant lesdits rayons infrarouges (3) ayant un pouvoir semi-réflecteur et une semi-transmittance.

2. Verre de lunettes selon la revendication 1, dans lequel lesdites couches minces absorbant les rayons infrarouges sont constituées essentiellement d'oxyde de chrome.

3. Verre de lunettes selon la revendication 1, dans lequel lesdites couches minces absorbant les rayons infrarouges sont revêtues de couches minces semi-translucides (6).

4. Verre de lunettes selon l'une quelconque des revendications précédentes, dans lequel les couches minces respectives absorbant les rayons infrarouges ont une forme hexagonale dans le plan, l'ensemble desdites couches minces étant disposé à la manière d'un nid d'abeilles par rapport à la surface du verre.

5. Verre de lunettes selon la revendication 4, dans lequel la longueur et la largeur de ladite couche mince absorbant les rayons infrarouges sont toutes les deux comprises entre 0,2 et 0,3 mm, tandis que l'intervalle entre des couches minces adjacentes absorbant les rayons infrarouges est compris entre 0,05 et 0,25 mm.

6. Verre de lunettes selon l'une quelconque des revendications précédentes, dans lequel lesdites couches minces absorbant les rayons infrarouges sont disposées sur la surface du verre avec des couches minces absorbant les rayons ultraviolets.

7. Procédé de fabrication d'un verre de lunette (1) ayant des propriétés de filtrage des rayons infrarouges comprenant les étapes consistant à:
disposer une feuille de masque (5) dont la surface comprend un certain nombre d'ouvertures (5A) sensiblement parallèlement à la surface du côté oculaire d'un verre de lunettes (2);
réaliser un dépôt en phase vapeur d'un matériau absorbant les rayons infrarouges (3) sur ladite surface à travers ladite feuille de masquage.

8. Procédé de fabrication d'un verre de lunettes selon la revendication 7, comprenant les étapes consistant à:
réaliser le dépôt en phase vapeur du matériau absorbant les rayons infrarouges sur la surface du verre;
réaliser en outre le dépôt en phase vapeur d'un matériau semi-translucide (6) et/ou d'une couche de revêtement protectrice (8) sur ledit matériau absorbant les rayons infrarouges.
